# EUROPEAN PATENT SPECIFICATION

(11) **EP 2 746 550 B1**
(45) Date of publication and mention of the grant of the patent: **20.07.2016**
(21) Application number: 12197760.7
(22) Date of filing: 18.12.2012
(51) Int. Cl.: F01N 9/00, F02D 41/02, F02D 41/14, F02D 41/22

(54) **System for managing the maintenance of a particulate filter of an internal combustion engine**
System zum Steuern der Wartung eines Partikelfilters einer Brennkraftmaschine
Système de gestion de la maintenance d'un filtre à particules d'un moteur à combustion interne

(43) Date of publication of application: 25.06.2014
(73) Proprietor: IVECO S.p.A., 10156 Torino (IT)
(72) Inventor: Labella, Saverio, 10034 Chivasso (IT); Lomaestro, Massimo, 10045 Piossasco (IT); Varalda, Orlando, 10088 Volpiano (IT)
(74) Representative: Franzolin, Luigi

(56) References cited:
- EP-A1- 1 903 200
- EP-A1- 2 128 392
- WO-A1-2011/087431

## Description

System for managing the maintenance of a particulate filter of an internal combustion engine (E)

### Application field of the invention

The present invention refers to the field of particulate filters of internal combustion engines.

### Description of the prior art

Particulate filters are subject to clogging when it is not possible to provoke the natural regeneration of the filter.

For such natural regeneration, indeed, it is necessary to reach predetermined temperatures depending on the conditions of use of the vehicle. When the conditions of use of the vehicle are unfavorable for a long time, then it may be necessary to provoke the forced regeneration of the particulate filter, which generally determines the deterioration of the lubricating oil of the engine. Thus, such regeneration, in relation to the characteristics of the filter and of the engine, may make it necessary to take the vehicle to a garage for regenerating the filter and consequently for replacing the engine lubricating oil.

The current level of filter clogging may be determined or estimated in many ways. When the filter needs a forced regeneration, a warning light or a message can be displayed to the driver, inviting him/her to go to a garage. In some cases, the level of filter clogging may determine a decay in the performance of the vehicle, sometimes controlled by the engine control unit.

Such method for managing the maintenance of the particulate filter which is known from, for example WO 2011/087431 A, is considered as unsatisfactory.

### Summary of the invention

Therefore the aim of the present invention is to overcome all the drawbacks deriving from the method for managing the maintenance of the particulate filter of the prior art.

A method for managing the maintenance of the particulate filter of an internal combustion engine is object of the present invention, according to claim 1.

By virtue of the present invention, the driver can be warned in advance of the particulate filter's tendency to clog, so that he/she can drive the vehicle as to facilitate the natural regeneration of the particulate filter. Thus a forced regeneration is avoided.

Indeed, if the driver, once he/she has received the warning message, manages to create the optimal conditions for the natural regeneration of the filter, the message is automatically cancelled and the vehicle can carry on its operations without any extraordinary maintenance.

On the contrary, the systems of the prior art could no longer leave such a warning mode, once the need to go to the garage and regenerate the filter had been signalled, also because at that point the clogging state was such that a natural regeneration was no longer possible. The aim of the present invention is to avoid all this.

By virtue of the present invention, if the vehicle belongs to a fleet, it is also possible to manage each vehicle's turn of travelling within urban areas and outside urban areas, so that all the vehicles can appropriately reach the ideal condition for the natural regeneration of the particulate filter, avoiding the forced regeneration.

In particular, the vehicle itself, by carrying out the method that is object of the present invention, participates to the management of the so-called turns and in particular to the determination of the correct frequency of each turn.

The advantages deriving from this are relevant: in particular, a remarkable reduction of vehicle extraordinary repairs, a reduction of the maintenance costs and above all a reduction of lubricating oil and fuel consumption that are necessary to the forced regeneration.

Another object of the present invention is a device for managing the maintenance of a particulate filter.

A further object of the present invention is a ground vehicle comprising a device for managing the maintenance of a particulate filter.

Preferred embodiments of the invention will be described more fully in the claims, which are an integral part of the present description.

### Brief description of the Figures

Further purposes and advantages of the present invention will become clear from the following detailed description of a preferred embodiment (and of its alternative embodiments) and the drawings that are attached hereto, which are merely illustrative and non-limitative, in which:
figure 1 shows a logic diagram of the components involved in the embodiment of the present invention;
figure 2 shows an example of block diagram defining a preferred embodiment of the method of the present invention.

In the figures the same reference numbers and letters identify the same elements or components.

### Detailed description of preferred embodiments of the invention

The method that is object of the invention is now described. According to such method, the vehicle particulate filter's tendency to clog is calculated, for example continuously, notifying to the driver the time or the number of kilometres left before the particulate filter will be subject a forced regeneration.

Hereinafter, filter always refers to a particulate filter. Preferably, at least two subsequent clogging values of the particulate filter are acquired, preferably the last subsequent n values, and when the clogging level appears to be increasing, the number of hours or days left before a forced regeneration of the filter is determined, considering the same increase rate calculated on the last subsequent n values.

If the n acquisitions are made with a certain delay, for example every 30 minutes, or every hour, the number of remaining hours can be immediately determined.

If the n acquisitions identify the distance covered by the vehicle, for example with acquisitions made every 100 km, then the number of km left before the forced regeneration of the filter becomes necessary can be immediately determined.

Since the distance covered by the vehicle depends on time, it is always possible to make acquisition based on time in order to calculate the number of remaining km and vice versa.

According to a preferred alternative embodiment of the invention, the following steps are performed:
- calculation of a moving average on the last n acquisitions of the value of the particulate accumulated in the filter, such value can be obtained according to measurements and/or estimations per se known,
- comparison between the acquisitions and when at least the value of one of the acquisitions exceeds a preceding value of another of the n acquisitions,
- calculation of a tendency line, (for example a linear regression), preferably in terms of angular coefficient;
- calculation of how many hours/days of vehicle use, or calculation of how many kilometers of vehicle use, are left before the filter clogging will be such as to require a forced regeneration; such calculation is obtained by means of the aforementioned angular coefficient of the tendency line;
- generation of a warning message addressed to the driver, which shows such time or number of kilometers left.

In order to avoid the driver to receive messages all the time, according to a preferred alternative embodiment of the invention, such warning is given as a function of the current clogging level of the particulate filter and/or of the value of the aforementioned angular coefficient. Current level refers to the clogging level resulting from the last acquisition or from the average value of the last n acquisitions.

Filtering such messages avoids the driver to be warned when, for example, a lot of days are left, for example more than 100, or when more than 3000 kilometers are left. Accordingly, the decision to send or not the message to the driver can be taken according to the number of days/hours or kilometers left, instead of considering the clogging level of the filter.

As an alternative, or in addition, to the previous strategy, according to a further alternative embodiment of the invention, the decision to send or not the message to the driver can be taken according to the duration, exceeding a certain number of hours or kilometers, of the pre-alert state.

In the following, pre-alert state refers to the state wherein a clogging risk, lower than said thresholds of remaining hours or kilometers, has been detected, but no message has actually been sent to the driver. The alert state, instead, refers to a state when the duration of the pre-alert state has been such as to induce the system to send a message to the driver.

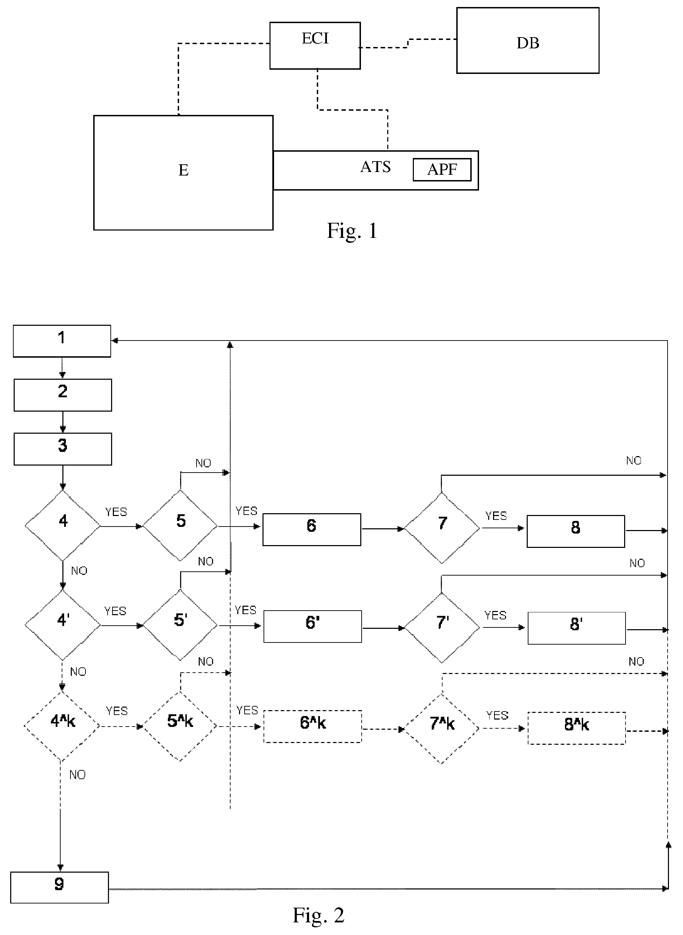

Figure 1 schematically shows the components of a vehicle that are involved in the present invention, namely the internal combustion engine E, the exhaust gas treatment line ATS comprising the particulate filter APF, the electronic control unit ECI that controls the engine and monitors the ATS and human-machine interface means, typically the dashboard DB.

A further preferred alternative embodiment of the method is described in reference to the functional block diagram of the attached figures, the blocks intended to correspond to logical functions carried out by the apparatus realizing them.

With reference to figure 2, the following steps are performed:
- (step 1) wait for a delay;
- (step 2) acquire a first clogging value of the particulate filter and of a second subsequent clogging value of the particulate filter;
- (step 3) calculate the number of days/hours left before a forced regeneration is necessary;
- (step 4) if the last acquired clogging level, or if an average of said acquired clogging values, exceeds a first upper clogging threshold (HL) and
- (step 5) if the number of days left before the forced regeneration is below a first lower value (C) of days left, then
- (step 6) start or continue the pre-alert state, thus
- (step 7) if the pre-alert state persists for a number of hours exceeding a first threshold (X) of hours, then
- (step 8) display a warning message on the dashboard (DB) showing the time left before a forced regeneration is necessary and go back to the beginning;
- (step 4') if the last acquired clogging level, or the average of said subsequent values, is below a first upper clogging threshold (HL) and above a second clogging threshold (ML) lower than said upper threshold (HL) and
- (step 5') if the number of days before the forced regeneration is below a second intermediate value (B) of days left, lower than said first lower value (C), then
- (step 6') start a pre-alert state, thus
- (step 7') if the pre-alert state persists for a number of hours above a second threshold (Y) of hours, higher than said first threshold (X), then
- (step 8') display a warning message on the dashboard (DB) showing the time left before a forced regeneration is necessary and go back to the beginning;
- instead, if (steps 5 or 5') the number of days left before a forced regeneration is necessary is not below said first value (A) or second value (B), respectively, of days left, then go back to the beginning;
- instead, if (steps 7 or 7') the pre-alert state does not persist for a number of hours exceeding the first threshold (X) or the second threshold (Y) of hours, respectively, than go back to the beginning;
- (step 9) if, instead, a last clogging level, or an average of said subsequent acquired values, is below a k^{th} lower clogging threshold of the filter, then cancel a possible pre-alert state and go back to the beginning.

It is evident from figure 2 that the clogging level of the filter can be divided into k levels. A respective reference threshold A, B, C of days or kilometers left can be associated to each level, below which the pre-alert state starts; moreover, a respective duration threshold X, Y, Z of the pre-alert state can be associated to each filter clogging level, above which the alert state is triggered, namely a warning message is sent to the driver.

According to a preferred alternative embodiment of the invention, the k levels (or threshold) are equally distributed among the conditions of completely clean filter and minimum filter clogging triggering a forced regeneration message:
(minimum filter clogging triggering a forced regeneration message - minimum clogging value)/k.

According to another alternative embodiment, the thresholds are exponentially distributed.

According to a preferred alternative embodiment of the invention, the k levels are only three. It is evident that having only three levels makes the implementation of the present invention very easy and computationally easy.

The present invention may be realized by means of the vehicle control unit ECI, possibly providing a suitable programming of the latter.

Thus, the present invention may advantageously be realized by means of a computer program, which comprises program code means performing one or more steps of said method, when said program is run on a computer. For this reason the scope of the present patent is meant to cover also said computer program and the computer-readable means that comprise a recorded message, such computer-readable means comprising the program code means for performing one or more steps of such method, when such program is run on a computer.

It will be apparent to the person skilled in the art that other embodiments of the invention can be conceived and reduced to practice without departing from the scope of the invention as defined by the appended claims. From the description set forth above it will be possible for the person skilled in the art to embody the invention with no need of describing further construction details. The elements and the characteristics described in the different preferred embodiments may be combined without departing from the scope of the present application as defined by the appended claims.

## Claims

1. Method for managing the maintenance of a particulate filter of an internal combustion engine (E), comprising a step of displaying a warning message containing a time threshold after which a forced regeneration of the particulate filter will be necessary, the method comprising at least the following preliminary steps:
- acquisition (2) of a first clogging value of the particulate filter and subsequent acquisition (2) of a second clogging value of the particulate filter,
- if said second value exceeds the first one, estimation (3) of said time threshold as a remaining operating time of the internal combustion engine (E) before a forced regeneration of the particulate filter will be necessary,
- displaying of a warning message showing such remaining operating time;
said estimation is determined by means of the calculation of a tendency curve.

2. Method according to claim 1, comprising a step of allowing the displaying of said warning message on the basis of the current clogging level of the particulate filter and/or on the basis of the clogging speed of the filter and/or on the basis of the remaining engine operating time before a forced regeneration of the particulate filter is necessary.

3. Method according to claim 2, wherein said current clogging level is obtained from an average of said acquisitions.

4. Method according to one of the previous claims from 1 to 3, wherein said first and second acquisition of the clogging level of the particulate filter identify corresponding numbers of kilometers covered by a vehicle comprising said internal combustion engine (E) and a distance covered as the difference of said numbers of kilometers and wherein said remaining time is calculated as a function of an average speed and of a time interval, wherein
- said time interval is defined by said first and second acquisitions and
- said average speed is calculated as the average speed of a vehicle comprising said internal combustion engine (E), in said time interval.

5. Method according to claim 1, further comprising at least the following preliminary steps:
- acquisition of a first clogging value of the particulate filter and subsequent acquisition of a second clogging value of a particulate filter,
- if said second value is higher than the first one, estimation of said threshold as the remaining number of kilometers to be covered by said internal combustion engine (E) before a forced regeneration of the particulate filter is necessary,
- displaying of a warning message showing such remaining number of kilometers.

6. A method according to any of the previous claims, further comprising a step for cancelling said warning message displaying when operating conditions of the vehicle occur that tend to move away/increase said threshold exceeding which a forced regeneration of the particulate filter is necessary.

7. A method according to any one of the previous claims from 1 to 4 comprising the following steps performed cyclically in a succession:
- (step 1) wait for a delay;
- (step 2) acquire a first clogging value of the particulate filter and a second subsequent clogging value of the particulate filter;
- (step 3) calculate of the number of days/hours left before a forced regeneration is necessary;
- (step 4) if the last acquired clogging level, or if an average of said acquired clogging values, exceeds a first upper clogging threshold (HL) and
- (step 5) if the number of days left before the forced regeneration is below a first lower value (C) of remaining days, then
- (step 6) start or continue the pre-alert state, thus
- (step 7) if the pre-alert state persists for a number of hours exceeding a first threshold (X) of hours, then
- (step 8) display on the dashboard (DB) a warning message showing the time left before a forced regeneration is necessary and go back to the beginning;
- (step 4') if the last acquired clogging level, or the average of said subsequent values, is below a first upper clogging threshold (HL) and above a second clogging threshold (ML) lower than said upper threshold (HL) and
- (step 5') if the number of days before the forced regeneration is below a second intermediate value (B) of days left, lower than said first lower value (C), then
- (step 6') start a pre-alert state, thus
- (step 7') if the pre-alert state persists for a number of hours above a second threshold (Y) of hours, higher than said first threshold (X), then
- (step 8') display on the dashboard (DB) a warning message showing the time left before a forced regeneration is necessary and go back to the beginning;
- instead, if (steps 5 or 5') the number of days left before a forced regeneration is necessary is not below said first value (A) or second value (B), respectively, of remaining days, then go back to the beginning;
- instead, if (steps 7 or 7') the pre-alert state does not persist for a number of hours exceeding the first threshold (X) or the second threshold (Y) of hours, respectively, than go back to the beginning;
- (step 9) if, instead, a last clogging level, or an average of said subsequent acquired values, is below a k thlower clogging threshold of the filter, then cancel a possible pre-alert state and go back to the beginning.

8. Device for managing the maintenance of a particulate filter of an internal combustion engine (E), **characterized in that** it comprises means for performing all the steps of any one of the previous claims from 1 to 7.

9. Computer program comprising program code means suitable for performing all the steps of any claim from 1 to 7, when such program is run on a computer.

10. Computer-readable means comprising a recorded program, said computer-readable means comprising program code means suitable for performing all the steps according to claims from 1 to 7, when said program is run on a computer.

11. Ground vehicle comprising an internal combustion engine (E) having
- an exhaust gas treatment system (ATS) comprising a particulate filter (APF) and
- a dashboard (DB)
and **characterized in that** it comprises a device for managing the maintenance of a particulate filter according to claim 8.

## Patentansprüche

1. Verfahren zur Steuerung der Wartung eines Partikelfilters einer Brennkraftmaschine (E), umfassend einen Schritt der Anzeige eines Warnhinweises, enthaltend eine Zeitschwelle, nach welcher eine erzwungene Regeneration des Partikelfilters erforderlich sein wird, welches Verfahren zumindest die folgenden vorläufigen Schritte umfasst:
- Erfassung (2) eines ersten Verstopfungswertes des Partikelfilters, und nachfolgende Erfassung (2) eines zweiten Verstopfungswertes des Partikelfilters,
- falls der zweite Wert den ersten überschreitet, Schätzung (3) der Zeitschwelle als eine verbleibende Betriebszeit der Brennkraftmaschine (E), bevor eine erzwungene Regeneration des Partikelfilters erforderlich sein wird,
- Anzeige eines Warnhinweises, der diese verbliebene Betriebszeit zeigt;
wobei die Schätzung durch Berechnung einer Tendenzkurve vorgenommen wird.

2. Verfahren gemäß Anspruch 1, umfassend einen Schritt, der die Anzeige des Warnhinweises auf Grundlage des aktuellen Verstopfungsniveaus des Partikelfilters und/oder auf Grundlage der Verstopfungsgeschwindigkeit des Filters und/oder auf Grundlage der verbleibenden Brennkraftmaschinen-Betriebszeit, bevor eine erzwungene Regeneration des Partikelfilters erforderlich ist, zulässt.

3. Verfahren gemäß Anspruch 2, bei welchem das aktuelle Verstopfungsniveau erhalten wird aus einem Durchschnitt von Erfassungen.

4. Verfahren gemäß einem der vorhergehenden Ansprüche 1 bis 3, bei welchem die erste und zweite Erfassung des Verstopfungsniveaus des Partikelfilters entsprechende Zahlen von Kilometern identifizieren, die von einem die Brennkraftmaschine (E) umfassenden Fahrzeug zurückgelegt werden, identifizieren, sowie eine Strecke, die eine Differenz dieser Zahlen von Kilometern ist, wobei die verbleibende Zeit berechnet wird als eine Funktion einer Durchschnittsgeschwindigkeit und eines Zeitintervalls, wobei
- das Zeitintervall definiert ist durch die ersten und zweiten Erfassungen, und
- die Durchschnittsgeschwindigkeit berechnet wird als die Durchschnittsgeschwindigkeit eines Fahrzeugs, das die Brennkraftmaschine (E) umfasst, in diesem Zeitintervall.

5. Verfahren gemäß Anspruch 1, ferner umfassend zumindest die folgenden vorläufigen Schritte:
- Erfassung eines ersten Verstopfungswertes des Partikelfilters und nachfolgende Erfassung eines zweiten Verstopfungswertes des Partikelfilters,
- falls der zweite Wert höher ist als der erste, Schätzung der Schwelle als die verbleibende Zahl von Kilometern, die von der Brennkraftmaschine (E) zurückzulegen ist, bevor eine erzwungene Regeneration des Partikelfilters erforderlich ist,
- Anzeige eines Warnhinweises, der diese verbleibende Anzahl von Kilometern zeigt.

6. Verfahren gemäß einem der vorhergehenden Ansprüche, ferner umfassend einen Schritt der Beseitigung der Anzeige des Warnhinweises, wenn Betriebsbedingungen des Fahrzeugs auftreten, die eine Entfernung oder einen Zuwachs der Schwelle bewirken, bei deren Überschreiten eine erzwungene Regeneration des Partikelfilters erforderlich ist.

7. Verfahren gemäß einem der vorhergehenden Ansprüche 1 bis 4, umfassend die folgenden Schritte, die zyklisch in einer Abfolge durchgeführt werden:
- (Schritt 1) eine Verzögerung abwarten;
- (Schritt 2) Erfassen eines ersten Verstopfungswertes des Partikelfilters und eines nachfolgenden zweiten Verstopfungswertes des Partikelfilters;
- (Schritt 3) Berechnung der Zahl von Tagen/Stunden, die verbleiben, bevor eine erzwungene Regeneration erforderlich ist;
- (Schritt 4) falls das letzte ermittelte Verstopfungsniveau oder ein Durchschnitt dieser ermittelten Verstopfungswerte eine erste obere Verstopfungsschwelle (HL) überschreitet; und
- (Schritt 5) falls die verbleibende Zahl von Tagen, bevor die erzwungene Regeneration unterhalb eines ersten niedrigeren Wertes (C) verbleibender Tage liegt, dann
- (Schritt 6) Starten oder Fortsetzen eines Voralarmzustands, somit
- (Schritt 7) falls der Voralarmzustand für eine Anzahl von Stunden fortbesteht, die eine erste Schwelle (X) von Stunden überschreitet, dann
- (Schritt 8) Anzeige auf dem Armaturenbrett (DB) eines Warnhinweises, der die verbleibende Zeit zeigt, bevor eine erzwungene Regeneration erforderlich ist, und zurückgehen auf Anfang;
- (Schritt 4') falls das zuletzt ermittelte Verstopfungsniveau oder der Durchschnitt der aufeinanderfolgenden Werte unterhalb einer ersten oberen Verstopfungsschwelle (HL) liegt und oberhalb einer zweiten Verstopfungsschwelle (ML) niedriger als die obere Schwelle (HL), und
- (Schritt 5') falls die Zahl verbleibender Tage, bevor die erzwungene Regeneration unterhalb eines zweiten Mittelwertes (B) verbleibender Tage liegt, der niedriger ist als der erste niedrigere Wert (C), dann
- (Schritt 6') starte einen Voralarmzustand, dann
- (Schritt 7') falls der Voralarmzustand für eine Anzahl von Stunden oberhalb einer zweiten Schwelle (Y) von Stunden fortbesteht, die höher ist als die erste Schwelle (X), dann
- (Schritt 8') Anzeige eines Warnhinweises auf dem Armaturenbrett (DB), der die verbleibende Zeit zeigt, bevor eine erzwungene Regeneration erforderlich ist, und Zurückgehen auf den Anfang;
- stattdessen, falls (Schritte 5 oder 5') die Anzahl von verbleibenden Tagen, bevor eine erzwungene Regeneration erforderlich ist, nicht unterhalb eines ersten Wertes (A) oder eines zweiten Wertes (B) jeweils verbleibender Tage liegt, dann gehe zurück zum Anfang;
- stattdessen, falls (Schritte 7 oder 7') der Voralarmzustand nicht für eine Anzahl von Stunden fortbesteht, die die erste Schwelle (X) oder die zweite Schwelle (Y) von Stunden jeweils überschreitet, dann gehe zurück zum Anfang;
- (Schritt 9) falls stattdessen ein letztes Verstopfungsniveau oder ein Durchschnitt der aufeinanderfolgenden ermittelten Werte unterhalb einer K-ten Verstopfungsschwelle des Filters liegt, dann beseitige einen möglichen Voralarmzustand und gehe zurück auf Anfang.

8. Vorrichtung zur Steuerung der Wartung eines Partikelfilters einer Brennkraftmaschine (E), **dadurch gekennzeichnet, dass** sie Mittel zur Durchführung aller Schritte von einem der vorhergehenden Ansprüche 1 bis 7 umfasst.

9. Computerprogramm, umfassend Programmcodemittel, geeignet zur Durchführung aller Schritte von einem der Ansprüche 1 bis 7, wenn ein solches Programm auf einem Computer durchgeführt wird.

10. Computerlesbares Medium, umfassend ein gespeichertes Programm, wobei die computerlesbaren Mittel Programmcodemittel umfassen, die geeignet sind zur Durchführung aller Schritte gemäß der Ansprüche 1 bis 7, wenn das Programm auf einem Computer durchgeführt wird.

11. Bodenfahrzeug, umfassend eine Brennkraftmaschine (E) mit
- einem Abgasbehandlungssystem (ATS) umfassend einen Partikelfilter (APF) und
- ein Armaturenbrett (DB),
**dadurch gekennzeichnet, dass** es eine Vorrichtung zur Steuerung der Wartung eines Partikelfilters gemäß Anspruch 8 umfasst.

## Revendications

1. Procédé pour gérer l'entretien d'un filtre à particules d'un moteur à combustion interne (E), comprenant une étape consistant à afficher un message d'avertissement contenant un seuil de temps après lequel une régénération forcée du filtre à particules sera nécessaire, le procédé comprenant au moins les étapes préliminaires suivantes :
- acquisition (2) d'une première valeur d'encrassement du filtre à particules et l'acquisition ultérieure (2) d'une seconde valeur d'encrassement du filtre à particules,
- si ladite seconde valeur dépasse la première, estimation (3) dudit seuil de temps en tant que temps de fonctionnement restant du moteur à combustion interne (E) avant qu'une régénération forcée du filtre à particules ne soit nécessaire,
- l'affichage d'un message d'avertissement montrant un tel temps de fonctionnement restant ;
ladite estimation est déterminée au moyen du calcul d'une courbe de tendance.

2. Procédé selon la revendication 1, comprenant une étape consistant à permettre l'affichage dudit message d'avertissement sur la base du niveau d'encrassement actuel du filtre à particules et/ou sur la base de la vitesse d'encrassement du filtre et/ou sur la base du temps de fonctionnement de moteur restant avant qu'une régénération forcée du filtre à particules ne soit nécessaire.

3. Procédé selon la revendication 2, dans lequel ledit niveau d'encrassement actuel est obtenu à partir d'une moyenne desdites acquisitions.

4. Procédé selon l'une des revendications précédentes de 1 à 3, dans lequel lesdites première et seconde acquisitions du niveau d'encrassement du filtre à particules identifient des nombres correspondants de kilomètres couverts par un véhicule comprenant ledit moteur à combustion interne (E) et une distance couverte en tant que différence desdits nombres de kilomètres et dans lequel ledit temps restant est calculé en fonction d'une vitesse moyenne et d'un intervalle de temps, dans lequel
- ledit intervalle de temps est défini par lesdites première et seconde acquisitions et
- ladite vitesse moyenne est calculée en tant que vitesse moyenne d'un véhicule comprenant ledit moteur à combustion interne (E), dans ledit intervalle de temps.

5. Procédé selon la revendication 1, comprenant en outre au moins les étapes préliminaires suivantes :
- l'acquisition d'une première valeur d'encrassement du filtre à particules et l'acquisition ultérieure d'une seconde valeur d'encrassement d'un filtre à particules,
- si ladite seconde valeur est supérieure à la première, l'estimation dudit seuil en tant que nombre de kilomètres restants à couvrir par ledit moteur à combustion interne (E) avant qu'une régénération forcée du filtre à particules ne soit nécessaire,
- l'affichage d'un message d'avertissement montrant un tel nombre de kilomètres restants.

6. Procédé selon l'une quelconque des revendications précédentes, comprenant en outre une étape destinée à annuler ledit message d'avertissement affichant, quand surviennent des conditions de fonctionnement du véhicule qui ont tendance à éloigner/augmenter ledit dépassement de seuil, qu'une régénération forcée du filtre à particules est nécessaire.

7. Procédé selon l'une quelconque des revendications précédentes de 1 à 4 comprenant les étapes suivantes réalisées de manière cyclique en une succession :
- (étape 1) attente d'un délai ;
- (étape 2) acquisition d'une première valeur d'encrassement du filtre à particules et d'une seconde valeur d'encrassement ultérieure du filtre à particules ;
- (étape 3) calcul du nombre de jours/heures qu'il reste avant qu'une régénération forcée ne soit nécessaire ;
- (étape 4) si le dernier niveau d'encrassement acquis, ou si une moyenne desdites valeurs d'encrassement acquises, dépasse un premier seuil d'encrassement supérieur (HL) et
- (étape 5) si le nombre de jours qu'il reste avant la régénération forcée est inférieur à une première valeur inférieure (C) de jours restants, alors
- (étape 6) le démarrage ou la poursuite de l'état de pré-alerte, ainsi
- (étape 7) si l'état de pré-alerte persiste pendant un nombre d'heures dépassant un premier seuil (X) d'heures, alors
- (étape 8) l'affichage sur le tableau de bord (DB) d'un message d'avertissement montrant le temps qu'il reste avant qu'une régénération forcée ne soit nécessaire et le retour au début ;
- (étape 4') si le dernier niveau d'encrassement acquis, ou la moyenne desdites valeurs ultérieures, est inférieur à un premier seuil d'encrassement supérieur (HL) et supérieur à un second seuil d'encrassement (ML) inférieur audit seuil supérieur (HL) et
- (étape 5') si le nombre de jours avant la régénération forcée est inférieur à une seconde valeur intermédiaire (B) de jours restants, inférieure à ladite première valeur inférieure (C), alors
- (étape 6') le démarrage d'un état de pré-alerte, ainsi
- (étape 7') si l'état de pré-alerte persiste pendant un nombre d'heures dépassant un second seuil (Y) d'heures, supérieur audit premier seuil (X), alors
- (étape 8') l'affichage sur le tableau de bord (DB) d'un message d'avertissement montrant le temps qu'il reste avant qu'une régénération forcée ne soit nécessaire et le retour au début ;
- à la place, si (étape 5 ou 5') le nombre de jours qu'il reste avant qu'une régénération forcée ne soit nécessaire n'est pas inférieur à ladite première valeur (A) ou seconde valeur (B), respectivement, de jours restants, alors le retour au début ;
- à la place, si (étape 7 ou 7') l'état de pré-alerte ne persiste pas pendant un nombre d'heures dépassant le premier seuil (X) ou le second seuil (Y) d'heures, respectivement, alors le retour au début ;
- (étape 9) si, à la place, un dernier état d'encrassement, ou une moyenne desdites valeurs acquises ultérieures, est inférieur à un k^{ème} seuil d'encrassement inférieur du filtre, alors l'annulation d'un état de pré-alerte possible et le retour au début.

8. Dispositif pour gérer l'entretien d'un filtre à particules d'un moteur à combustion (E), **caractérisé en ce qu'**il comprend des moyens pour réaliser toutes les étapes selon l'une quelconque des revendications précédentes de 1 à 7.

9. Programme informatique comprenant des moyens de code de programme adaptés pour réaliser toutes les étapes selon l'une quelconque des revendications précédentes de 1 à 7, lorsqu'un tel programme est exécuté sur un ordinateur.

10. Support de stockage lisible par ordinateur comprenant un programme enregistré, ledit support de stockage lisible par ordinateur comprenant des moyens de code de programme adaptés pour réaliser toutes les étapes selon les revendications de 1 à 7, lorsque ledit programme est exécuté sur un ordinateur.

11. Véhicule terrestre comprenant un moteur à combustion interne (E) ayant
- un système de traitement de gaz d'échappement (ATS) comprenant un filtre à particules (APF) et
- un tableau de bord (DB)
et **caractérisé en ce qu'**il comprend un dispositif pour gérer l'entretien d'un filtre à particules selon la revendication 8.
